# FASCICULE DE BREVET EUROPEEN

(11) **EP 2 143 397 B1**
(45) Date de publication et mention de la délivrance du brevet: **27.01.2016**
(21) Numéro de dépôt: 09164880.8
(22) Date de dépôt: 08.07.2009
(51) Int. Cl.: A61C 7/36, F16B 9/02, F16B 21/02, A61F 5/56, A61C 7/08

(54) **Gouttières dentaires à bielles de liaison**
Bissschienen mit Verbindungsbändern
Mouthguards with link rods

(30) Priorité: 10.07.2008 FR 0803927
(43) Date de publication de la demande: 13.01.2010
(73) Titulaire: Vincent, Gérard, 75008 Paris (FR)
(72) Inventeur: Vincent, Gérard, 75008 Paris (FR)
(74) Mandataire: Bertrand, Didier

(56) Documents cités:
- EP-A- 1 658 823
- FR-A- 989 495
- FR-A- 2 754 171
- FR-A- 2 872 406
- US-A1- 2007 224 567

## Description

La présente invention concerne des gouttières dentaires destinées à être disposées sur les arcades dentaires des mâchoires inférieure et supérieure d'un sujet et reliées par des bielles fixées à des dispositifs d'attache adaptés pour ces bielles.

On connaît de nombreux exemples de gouttières dentaires associées en paires, destinées à prendre appui sur l'arcade dentaire inférieure et supérieure, dans le cadre d'applications diverses, et comportant des dispositifs d'attache, généralement axes ou pivots, sur leur partie externe permettant la mise en place de bielles rigides poussantes ou de bielles tractrices permettant de réaliser un propulseur mandibulaire.

On pourra se référer par exemple aux documents DE29506512.5U, US 2007/0224567, FR 2 816 203, EP 1 719 481 ou US 7 146 982.

Le document EP 1 658 823 montre des tirants disposés en position occlusales, entre les gouttières, et constitués par des lames minces élastiques et flexibles qui ne travaillent qu'en traction.

Il est connu par le document FR 2 812 406 de proposer un jeu de bielles rigides de différentes longueurs, disposées en position sensiblement vestibulaire (c'est-à-dire latéralement aux gouttières), et adaptées à suivre petit à petit la différence d'avancée entre les mâchoires inférieure et supérieure. Néanmoins, ces bielles connues se présentent sous forme de tiges droites ou de bielles plates. Il en résulte au fur et à mesure du déplacement relatif d'une mâchoire par rapport à l'autre que les bielles exercent des forces dirigées non pas seulement parallèlement au plan médian des mâchoires mais également transversalement. Cela a pour conséquence d'une part des douleurs pour le sujet mais aussi des risques de casse au niveau des dispositifs d'attache des bielles.

L'invention a pour but d'améliorer les dispositifs de gouttières à bielles connus en permettant d'exercer une meilleure poussée, ou une meilleure traction d'une mâchoire sur l'autre.

Selon l'invention, on propose une paire de gouttières dentaires destinées à être disposées sur les arcades dentaires des mâchoires inférieure et supérieure d'un sujet, définissant un plan médian, comprenant deux pivots latéraux sur chaque gouttière, et deux bielles sensiblement rigides en position vestibulaire reliant latéralement respectivement un pivot d'une gouttière à un pivot de l'autre gouttière,
caractérisée en ce que
- les pivots sont perpendiculaires au plan médian sur chaque gouttière
- chaque bielle est composée d'une partie centrale définissant un axe et de deux pattes d'extrémité définissant chacune un plan, les deux dits plans définis par les pattes d'extrémité étant distincts et parallèles au plan médian précité, ledit axe de la partie centrale coupant ces deux plans sous un angle non nul.

Les bielles étant sensiblement rigides, il faut comprendre que cette forme spéciale des bielles est permanente et leur est donnée lors de leur fabrication, par exemple lors du moulage pour des bielles avantageusement réalisées en plastique.

Chaque extrémité de bielle est associée à un dispositif d'attache comportant une base adaptée à la gouttière de l'arcade dentaire sur laquelle elle doit être montée, une portée parallèle au plan médian de l'arcade dentaire destinée à recevoir la patte d'extrémité de la bielle, et un axe perpendiculaire à cette portée.

Ainsi, il est possible de disposer chaque bielle de l'invention avec ses deux pattes parallèles au plan médian de l'arcade ce qui garantit une poussée et une traction réalisée dans de bonnes conditions, l'écart permanent entre les plans des pattes correspondant à l'écart d'implantation entre les deux mâchoires.

Avantageusement, la patte comporte un orifice traversant comportant une première section plus grande que la section principale de l'axe du dispositif d'attache et une seconde section correspondant à une section terminale à profil orienté de l'axe du dispositif d'attache, moyennant quoi la bielle peut être engagée sur l'axe du dispositif dans une première position et ne peut pas être désengagée quand elle est dans une seconde position relative de la bielle et du dispositif d'attache.

De manière particulièrement avantageuse, une paire de gouttière est associée à un jeu de bielles de plusieurs longueurs et d'écart constant entre les plans des pattes.

D'autres caractéristiques et avantages de l'invention ressortiront de la description suivante d'un exemple de réalisation. Il sera fait référence aux dessins annexés sur lesquels :
La figure 1 est une vue schématique de dessus des mâchoires supérieure et inférieure reliée par une bielle conforme à l'invention, la mâchoire inférieure étant représentée dans deux positions d'avancée et donc reliée à la mâchoire supérieure par deux bielles différentes selon la position,
Les figures 2 et 3 sont des vues respectivement en perspective et en coupe longitudinale d'un dispositif d'attache d'une extrémité de bielle de l'invention
Les figures 4 et 5 sont des vues respectivement en coupe longitudinale et de dessus d'une bielle de l'invention.

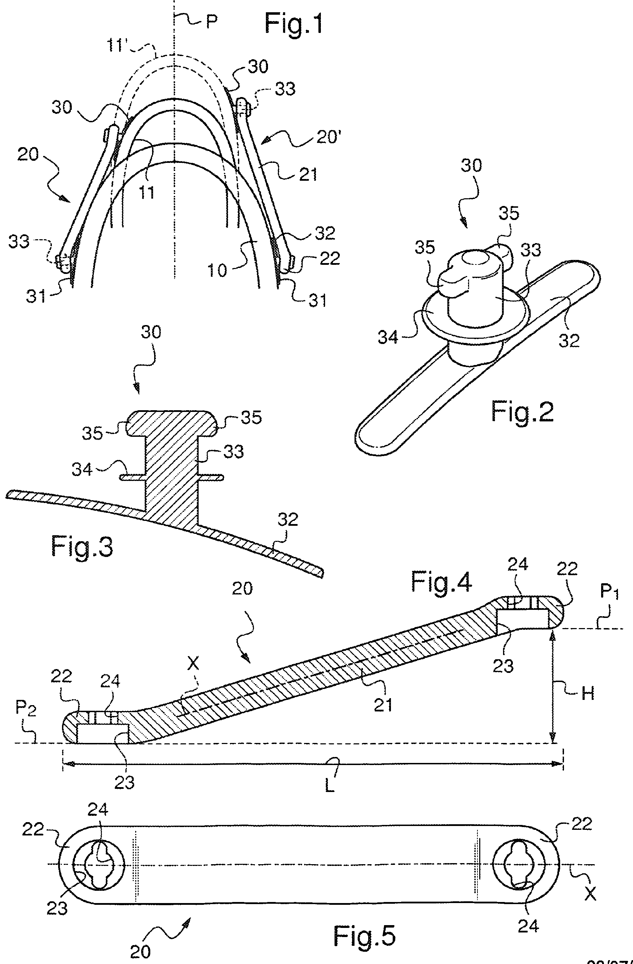

On a représenté schématiquement sur la figure 1 la gouttière de l'arcade dentaire 10 de la mâchoire supérieure (ou maxillaire) située au-dessus de la gouttière de l'arcade dentaire 11 de la mâchoire inférieure (ou mandibule). Les deux gouttières d'arcades 10, 11 sont symétriques par rapport au plan médian P du sujet, et celle de l'arcade inférieure 11 est représentée ici en avancée par rapport à celle de l'arcade supérieure d'une première valeur dans la position représentée en traits pleins et d'une seconde valeur dans la position 11' représentée en tirets. Les positions ont été représentées avec des écarts exagérés pour une meilleure lisibilité des dessins.

Dans la première position d'avancée, on relie les deux gouttières d'arcades 10 et 11 par deux bielles 20 (une seule a été représentée, dans la moitié gauche de la figure) fixées à leurs deux extrémités sur des dispositifs d'attaches avant et arrière 30 et 31 liés respectivement à une gouttière d'arcade 10 ou 11. La bielle 20 est en position vestibulaire, latérale aux mâchoires.

Dans la seconde position d'avancée, on relie les deux arcades 10 et 11 par deux autres bielles 20', plus longues que les bielles 20 (une seule a été représentée, dans la moitié droite de la figure) fixées à leurs deux extrémités sur les mêmes dispositifs d'attaches avant et arrière 30 et 31.

Chaque dispositif d'attache 30 ou 31 comporte une base mince courbe 32 destinée à s'adapter au profil de la gouttière d'arcade dentaire 10 ou 11 où elle est implantée, sur laquelle est formé un axe cylindrique 33 formant un angle avec la base 32 de manière à être, en position sur l'arcade, perpendiculaire au plan médian P. L'axe 33 comporte à mi-hauteur une collerette de butée 34 orthogonale à l'axe, donc parallèle au plan P. Il se termine par deux doigts radiaux 35 diamétralement opposés et perpendiculaires à l'axe 33.

Les deux dispositifs d'attache 30 et 31 ne diffèrent entre eux que par l'inclinaison plus ou moins grande de l'axe 33 par rapport à la base 32 de manière à respecter l'orientation de l'axe 33 perpendiculaire au plan médian P.

La base 32 est intégrée ou fixée à la gouttière dentaire.

Les figures 4 et 5 montrent le détail d'une bielle 20 conforme à l'invention. Elle est constituée par une plaquette sensiblement rigide, en forme de Z aplati, obtenue avantageusement par moulage d'une matière plastique. Elle comporte un corps principal 21 sous forme de plaque mince, par exemple d'1 mm ou moins, allongée définissant un axe X, aux extrémités duquel sont formées, avec un angle, deux pattes planes 22 définissant sensiblement des plans parallèles distincts P1 et P2 destinés à être parallèles au plan médian P quand la bielle 20 est en place. Ces deux plans sont écartés d'une distance H non nulle et constante d'une bielle à l'autre dans un jeu de bielles 20,20', correspondant à l'écart d'implantation entre les dispositif d'attache 30 et 31 (figure 1). L'épaisseur des pattes 22 peut être supérieure à celle de la partie centrale 21, par exemple entre 1,5 mm et 2 mm. Vue à plat, comme sur la figure 5, les pattes 22 prolongent le corps 21 et sont avantageusement arrondies. Chaque patte 22 vient s'articuler sur un axe 33 d'un dispositif d'attache 30 ou 31. À cette fin, la patte 22 est percée d'un orifice comportant une première section cylindrique 23, du côté tourné vers l'arcade, suivie d'une seconde section 24 dont la section transversale correspond sensiblement à la section transversale de l'axe 33 et des doigts 35 du dispositif d'attache (c'est-à-dire un profil orienté et non de révolution), augmentée du jeu nécessaire pour permettre le passage de l'axe et des doigts dans ladite section 24. La section 24 est orientée, ici perpendiculairement à l'axe X, de manière à permettre l'engagement de la patte 22 sur le profil orienté de l'axe 33 quand la bielle 20 est présentée perpendiculairement à la base 32 du dispositif d'attache, et au contraire à ne pas permettre le dégagement quand la bielle 20 est dans une direction plus ou moins alignée avec ladite base 32, c'est-à-dire en position d'utilisation. En position d'utilisation, les bielles 20 sont disposées avec une de leurs grandes faces plates dirigée vers les mâchoires tandis que leurs longs bords minces sont dirigés respectivement vers le haut et vers le bas.

Selon l'invention, il est proposé un jeu de plusieurs bielles de longueurs différentes, destiné à s'adapter à différentes avancées d'une mâchoire par rapport à l'autre. Il peut par exemple être prévu un pas de 1 mm, soit des longueurs de 20, 21, ...28, ..., en longueur projetée L sur le plan P, avec un écart H constant, par exemple de 12 mm.

Comme le fait comprendre la figure 1, l'angle formé par le corps principal de la bielle avec le plan P (et donc avec les plans des pattes), n'est pas le même selon la longueur de la bielle, de sorte que les pattes 22 sont maintenues sensiblement parallèles au plan P quelle que soit la longueur de la bielle.

## Revendications

1. Paire de gouttières dentaires destinées à être disposées sur les arcades dentaires des mâchoires inférieure et supérieure d'un sujet, définissant un plan médian (P), comprenant :
- deux pivots (33) latéraux sur chaque gouttière, et
- deux bielles (20, 20') sensiblement rigides disposées en position vestibulaire et reliant latéralement respectivement un pivot d'une gouttière à un pivot de l'autre gouttière, **caractérisée en ce que**
- les pivots (33) sont perpendiculaires au plan médian (P) sur chaque gouttière
- chaque bielle (20, 20') est composée d'une partie centrale (21) définissant un axe (X) et de deux pattes d'extrémité (22) définissant chacune un plan (P1, P2), les deux plans (P1, P2) définis par les pattes d'extrémité (22) sont distincts et parallèles au plan (P), l'axe (X) de la partie centrale coupant ces deux plans (P1, P2) sous un angle non nul.

2. Paire de gouttières selon la revendication 1, **caractérisée en ce qu'**elle comprend un dispositif d'attache (30, 31) comportant une portée (34) parallèle au plan médian (P) destinée à recevoir la patte d'extrémité (22) de la bielle (20), et un pivot (33) perpendiculaire à cette portée.

3. Paire de gouttières selon la revendication 2, **caractérisée en ce que** la patte comporte un orifice traversant comportant une première section (23) plus grande que la section principale de l'axe (33) du dispositif d'attache (30, 31) et une seconde section (24) correspondant à une section terminale à profil orienté de l'axe (33) du dispositif d'attache, moyennant quoi la bielle (20) peut être engagée sur l'axe (33) du dispositif dans une première position et ne peut pas être désengagée dans une seconde position relative de la bielle (20) et du dispositif d'attache (30, 31).

4. Paire de gouttières selon l'une quelconque de revendications 1 à 3, **caractérisée en ce que** la partie centrale (21) de chaque bielle (20, 20') est sous forme d'un plaque mince.

5. Paire de gouttières selon l'une quelconque des revendications 1 à 4, **caractérisée en ce qu'**elle est associée à un jeu de bielles comprenant une pluralité de bielles de plusieurs longueurs et d'écart constant (H) entre les plans de pattes (22).

## Patentansprüche

1. Bissschienenpaar zur Anordnung auf den Zahnbögen des Ober- und Unterkiefers einer Person, wodurch eine Mittelebene (P) bestimmt wird, umfassend:
- zwei seitliche Zapfen (33) an jeder Bissschiene, und
- zwei im Wesentlichen starre Bänder (20, 20'), die in vestibulärer Lage angeordnet sind und jeweils einen Drehzapfen einer Bissschiene mit einem Drehzapfen der anderen Bissschiene seitlich verbinden,
**dadurch gekennzeichnet, dass**
- die Drehzapfen (33) rechtwinklig zu der Mittelebene (P) an jeder Bissschiene sind
- jedes Band (20, 20') aus einem Mittelteil (21), der eine Achse (X) bestimmt, und zwei Endlaschen (22) besteht, die jede eine Ebene (P1, P2) bestimmen, die zwei von den Endlaschen (22) bestimmten Ebenen (P1, P2) sind verschieden und parallel zu der Ebene (P), wobei die Achse (X) des Mittelteils diese zwei Ebenen (P1, P2) unter einem Winkel ungleich null schneidet.

2. Bissschienenpaar nach Anspruch 1, **dadurch gekennzeichnet, dass** es eine Befestigungsvorrichtung (30, 31) umfasst, die einen Vorsprung (34) umfasst, der parallel zu der Mittelebene (P) ist und dazu bestimmt ist, die Endlasche (22) des Bandes (20) aufzunehmen, und einen Drehzapfen (33), der senkrecht zu diesem Vorsprung ist.

3. Bissschienenpaar nach Anspruch 2, **dadurch gekennzeichnet, dass** die Lasche ein Durchgangsloch umfasst, das einen ersten Abschnitt (23) umfasst, der größer ist als der Hauptabschnitt der Achse (33) der Befestigungsvorrichtung (30, 31), und einen zweiten Abschnitt (24), der einem Endabschnitt mit gerichtetem Profil der Achse (33) der Befestigungsvorrichtung entspricht, wobei das Band (20) in einer ersten Position mit der Achse (33) der Vorrichtung in Eingriff gebracht werden kann und in einer zweiten Position im Verhältnis zum Band (20) und zu der Befestigungsvorrichtung (30, 31) nicht außer Eingriff gebracht werden kann.

4. Bissschienenpaar nach einem der Ansprüche 1 bis 3, **dadurch gekennzeichnet, dass** der Mittelteil (21) jedes Bandes (20, 21') in Form einer dünnen Platte vorliegt.

5. Bissschienenpaar nach einem der Ansprüche 1 bis 4, **dadurch gekennzeichnet, dass** sie einem Satz von Bändern zugeordnet ist, der eine Vielzahl Bänder von verschiedenen Längen und gleichbleibendem Abstand (H) zwischen den Ebenen der Laschen (22) umfasst.

## Claims

1. A pair of dental gutters intended to be laid out on the dental arches of the lower and upper jaws of a subject, defining a median plane (P), comprising :
- two side pivots (33) on each gutter, and
- two substantially rigid linkages (20, 20') provided in vestibular position and laterally connecting a pivot of a gutter to a pivot of the other gutter, respectively,
**characterized in that**
- the pivots (33) are perpendicular to the median plane (P) on each gutter
- each linkage (20, 20') is made of a central part (21) defining an axis (X) and two end legs (22) defining each one a plane (P1, P2), the two planes (P1, P2) defined by the end legs (22) are separate and parallel to the plane (P), the axis (X) of the central part intersecting these two planes (P1, P2) under a non zero angle.

2. The pair of gutters according to claim 1, **characterized in that** it comprises a fastening device (30, 31) including a support (34) parallel to the median plane (P) intended to receive the end leg (22) of the linkage (20), and a pivot (33) perpendicular to this support.

3. The pair of gutters according to claim 2, **characterized in that** the leg includes a through hole including a first section (23) larger than the main section of the axis (33) of the fastening device (30, 31) and a second section (24) corresponding to a final section with a directed profile of the fastening device axis (33), whereby the linkage (20) can be engaged on the device axis (33) in a first position and cannot be disengaged in a second relative position of the linkage (20) and the fastening device (30, 31).

4. The pair of gutters according to any of claims 1 to 3, **characterized in that** the central part (21) of each linkage (20, 20') is provided as a thin plate.

5. The pair of gutters according to any of claims 1 to 4, **characterized in that** it is associated with a set of linkages comprising a plurality of linkages having various lengths and a constant gap (H) between the planes of the legs (22).
